# EUROPEAN PATENT APPLICATION

(11) **EP 4 517 900 A1**
(43) Date of publication of application: **05.03.2025**
(21) Application number: 22940390.2
(22) Date of filing: 11.11.2022
(51) Int. Cl.: H01M 10/0567, H01M 4/525, H01M 4/505, H01M 4/36, H01M 4/587, H01M 4/38, H01M 4/48, H01M 10/052

(54) **ADDITIVE AND RECHARGEABLE LITHIUM BATTERY INCLUDING SAME**

(30) Priority: 28.04.2022 KR 20220053002
(71) Applicant: SAMSUNG SDI CO., LTD., Yongin-si, Gyeonggi-do 17084 (KR)
(72) Inventor: KIM, Dahyun, Yongin-si, Gyeonggi-do 17084 (KR); YANG, Yeji, Yongin-si, Gyeonggi-do 17084 (KR); PARK, Sangwoo, Yongin-si, Gyeonggi-do 17084 (KR); KIM, Sundae, Yongin-si, Gyeonggi-do 17084 (KR); SHATUNOV, Pavel, Yongin-si, Gyeonggi-do 17084 (KR); TSAY, Olga, Yongin-si, Gyeonggi-do 17084 (KR); CHOI, Hyunbong, Yongin-si, Gyeonggi-do 17084 (KR); PARK, Hongryeol, Yongin-si, Gyeonggi-do 17084 (KR); HWANG, Hyeonji, Yongin-si, Gyeonggi-do 17084 (KR)
(74) Representative: Gulde & Partner
(86) International application number: PCT/KR2022/017695
(87) International publication number: WO 2023/210896

(57) **Abstract**

Provided are an additive represented by Chemical Formula 1, and a rechargeable lithium battery that includes an electrolyte including a non-aqueous organic solvent, a lithium salt, and the additive; a positive electrode including a positive electrode active material; and a negative electrode including a negative electrode active material, wherein the positive electrode active material includes a cobalt-free lithium nickel manganese-based oxide.

Details of Chemical Formula 1 are as described in the specification.

## Description

### [Technical Field]

This disclosure relates to an additive and a rechargeable lithium battery including the same.

### [Background Art]

A rechargeable lithium battery may be recharged and has three or more times as high energy density per unit weight as a conventional lead storage battery, nickel-cadmium battery, nickel hydrogen battery, nickel zinc battery and the like and may be also charged at a high rate and thus, is commercially manufactured for a laptop, a cell phone, an electric tool, an electric bike, and the like, and researches on improvement of additional energy density have been actively made.

Such a rechargeable lithium battery is manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions.

The electrolyte serves as a medium for moving lithium ions between negative and positive electrodes, in general, uses an organic solvent in which a lithium salt is dissolved, and is important in determining stability and performance of the rechargeable lithium battery.

The electrolyte is for example, prepared by adding a lithium salt such as LiPF₆, LiBF₄, LiFSI, and the like in a mixed solvent of high dielectric cyclic carbonate such as propylenecarbonate, ethylenecarbonate, and the like and chain carbonate such as diethylcarbonate, ethylmethylcarbonate, dimethylcarbonate, and the like. As development of batteries in various fields is activated, development of batteries with high output and high stability in a wide temperature range is considered to be important, and in addition, development of an electrolyte by optimally combining an organic solvent suppressing swelling, deterioration of capacity, and resistance increase with an additive to secure high power, long-term cycle-life characteristics, and high-temperature storage characteristics is important

On the other hand, as IT devices become increasingly high-performance, high-capacity batteries are required, wherein the high capacity may be realized by expanding a voltage region to increase energy density, but there is a problem of oxidizing an electrolyte in the high voltage region and thus deteriorating performance of a positive electrode.

In particular, cobalt-free lithium nickel manganese-based oxide is a positive electrode active material including not cobalt but nickel, manganese, and the like as a main component in its composition, and accordingly, a positive electrode including the same may be economical and realize high energy density and thus draws attentions as a next generation positive electrode active material.

However, when the positive electrode including the cobalt-free lithium nickel manganese-based oxide is used in a high-voltage environment, transition metals may be eluted due to structural collapse of the positive electrode, thereby causing a problem such as gas generation inside a cell, capacity reduction, and the like. This transition metal elution tends to be aggravated in a high-temperature environment, wherein the eluted transition metals are precipitated on the surface of a negative electrode and may cause a side reaction and thereby increase battery resistance and deteriorate battery cycle-life and output characteristics.

Accordingly, when the positive electrode including the cobalt-free lithium nickel manganese-based oxide is used, an electrolyte applicable under high-voltage and high-temperature conditions is required.

### [Disclosure]

### [Technical Problem]

An embodiment provides an additive having improved high-temperature characteristics.

Another embodiment provides a rechargeable lithium battery having improved high-voltage characteristics and high-temperature characteristics by combining an electrolyte capable of effectively protecting the positive electrode including cobalt-free lithium nickel manganese oxide with the use of a positive electrode including cobalt-free lithium nickel manganese oxide.

### [Technical Solution]

An embodiment of the present invention provides an additive represented by Chemical Formula 1.

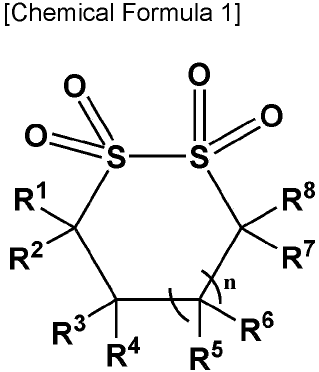

In Chemical Formula 1,
R¹ to R⁸ are each independently hydrogen, a halogen, a substituted or unsubstituted C1 to C10 alkyl group, a substituted or unsubstituted C2 to C10 alkenyl group, a substituted or unsubstituted C2 to C10 alkynyl group, a substituted or unsubstituted C1 to C10 alkoxy group, a substituted or unsubstituted C6 to C12 aryl group, or a combination thereof, and
n is an integer from 0 to 2.

Chemical Formula 1 may be represented by any one of Chemical Formula 1-1 to Chemical Formula 1-3.

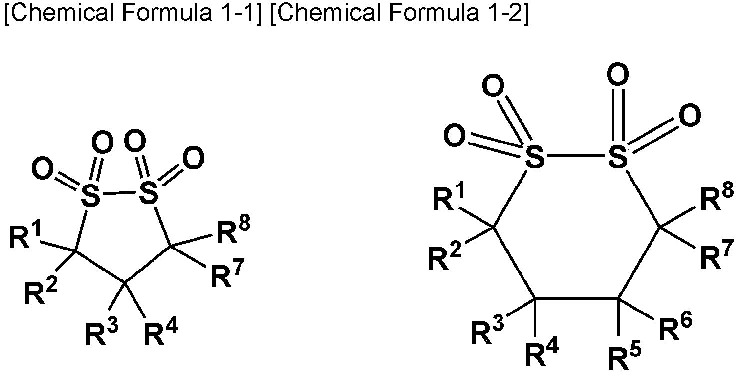

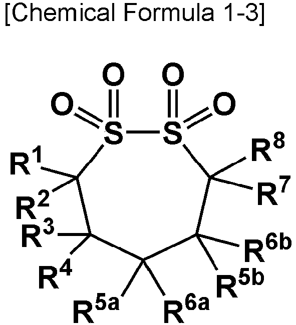

In Chemical Formula 1-1 to Chemical Formula 1-3,
R¹ to R⁸ are as described above, and R^{5a}, R^{6a}, R^{5b}, and R^{6b} are each independently hydrogen, a halogen, a substituted or unsubstituted C1 to C10 alkyl group, a substituted or unsubstituted C2 to C10 alkenyl group, a substituted or unsubstituted C2 to C10 alkynyl group, a substituted or unsubstituted C1 to C10 alkoxy group, a substituted or unsubstituted C6 to C12 aryl group, or a combination thereof.

R¹ to R⁸ may each independently be hydrogen, a halogen, or a substituted or unsubstituted C1 to C5 alkyl group.

The additive represented by Chemical Formula 1 may be selected from compounds of Group 1.

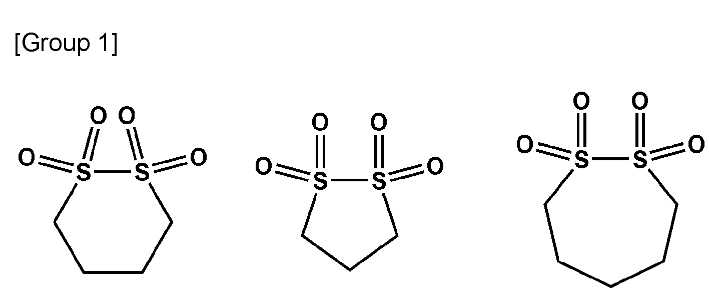

Another embodiment of the present invention provides a rechargeable lithium battery that includes an electrolyte including a non-aqueous organic solvent, a lithium salt, and the aforementioned additive; a positive electrode including a positive electrode active material; a negative electrode including a negative electrode active material, wherein the positive electrode active material includes a cobalt-free lithium nickel manganese-based oxide.

The cobalt-free lithium nickel manganese-based oxide may include a lithium composite oxide represented by Chemical Formula 2.

[Chemical Formula 2] LiₐNiₓMn_{y}M1_{z}M2_{w}O_{2-b}X_{b}

In Chemical Formula 2,
0.9 ≤ a < 1.2, 0 ≤ b < 0.1, 0 ≤ w < 0.1, 0.6 ≤ x < 1.0, 0 < y < 0.4, 0 < z < 0.1, w + x + y + z = 1,
M1 is at least one element selected from Al, Mg, Ti, Zr, Cr, Sr, V, B, W, Mo, Ce, Cr, and Nb, and
M2 is at least one element selected from Al, B, Ba, Ca, Ce, Cr, Fe, Mg, Mn, Mo, Nb, Si, Sr, Ti, V, W, and Zr, and X is at least one element selected from S, F, and P.

Chemical Formula 2 may be represented by Chemical Formula 2-1.

[Chemical Formula 2-1] LiₐNiₓ₁Mn_{y1}Al_{z1}M2_{w1}O_{2-b}X_{b}

In Chemical Formula 2-1,
0.9 ≤ a < 1.2, 0 ≤ b < 0.1, 0 ≤ w1 < 0.1, 0.6 ≤ x1 < 1.0, 0 < y1 < 0.4, 0 < z1 < 0.1, w1 + x1 + y1 + z1 = 1, M2 is at least one element selected from Al, B, Ba, Ca, Ce, Cr, Fe, Mg, Mn, Mo, Nb, Si, Sr, Ti, V, W, and Zr, and X is at least one element selected from S, F, and P.

In Chemical Formula 2-1, x1 may be 0.6 ≤ x1 ≤0.79, y1 may be 0.2 ≤ y1 ≤0.39, and z1 may be 0.01 ≤ z1 < 0.1.

The negative electrode active material may include at least one of graphite and a Si composite.

The Si composite may include a core including Si particles and an amorphous carbon coating layer.

The core including the Si particles may include at least one of a Si-C composite, SiOₓ (0 < x ≤ 2), and a Si alloy.

The central portion of the core may include voids.

A radius of the central portion may correspond to about 30% to about 50% of the radius of the Si-C composite, and an average particle diameter of the Si particle may be about 10 nm to about 200 nm.

The central portion does not include amorphous carbon, and the amorphous carbon may be present only on the surface portion of the negative electrode active material.

The negative electrode active material may further include crystalline carbon.

The additive may be included in an amount of 0.05 to 5.0 parts by weight based on 100 parts by weight of the electrolyte.

The additive may be included in an amount of 0.05 to 3.0 parts by weight based on 100 parts by weight of the electrolyte.

The additive may further include least one other additive selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexanetricyanide (HTCN), propene sultone (PST), propane sultone (PS), lithium tetrafluoroborate (LiBF₄), lithium difluorophosphate (LiPO₂F₂), and 2-fluoro biphenyl (2-FBP).

The rechargeable lithium battery may be operated at a high voltage of 4.4 V or higher.

### [Advantageous Effects]

A rechargeable lithium battery may implement improved high-temperature characteristics by suppressing an increase in resistance of the battery during high-temperature storage and reducing generated gas amount due to a combination of an electrolyte including the additive capable of effectively protecting the positive electrode and the negative electrode.

### [Description of the Drawings]

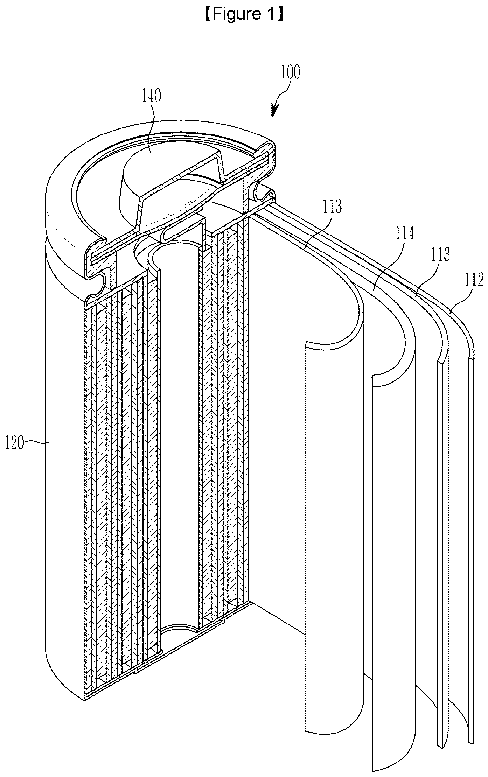

FIG. 1 is a schematic view showing a rechargeable lithium battery according to an embodiment of the present invention.

### [Best Mode for Invention]

Hereinafter, a rechargeable lithium battery according to an embodiment of the present invention will be described in detail with reference to the accompanying drawings. However, these embodiments are exemplary, the present invention is not limited thereto and the present invention is defined by the scope of claims.

In the present specification, when a definition is not otherwise provided, "substituted" refers to replacement of at least one hydrogen of a substituent or a compound by deuterium, a halogen, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 trifluoroalkyl group, a cyano group, or a combination thereof.

In one example of the present invention, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C20 alkyl group, a C6 to C30 aryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In addition, in specific examples of the present invention, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

In the present specification, "an aryl group" refers to a group including at least one hydrocarbon aromatic moiety, and may include a group in which all elements of the hydrocarbon aromatic moiety have p-orbitals which form conjugation, for example a phenyl group, a naphthyl group, and the like, a group in which two or more hydrocarbon aromatic moieties may be linked by a sigma bond, for example a biphenyl group, a terphenyl group, a quarterphenyl group, and the like, and a group in which two or more hydrocarbon aromatic moieties are fused directly or indirectly to provide a non-aromatic fused ring, for example a fluorenyl group.

The aryl group may include a monocyclic, polycyclic or fused ring polycyclic (i.e., rings sharing adjacent pairs of carbon atoms) functional group.

More specifically, the substituted or unsubstituted C6 to C20 aryl group may be a substituted or unsubstituted phenyl group, a substituted or unsubstituted naphthyl group, a substituted or unsubstituted anthracenyl group, a substituted or unsubstituted phenanthrenyl group, a substituted or unsubstituted naphthacenyl group, a substituted or unsubstituted pyrenyl group, a substituted or unsubstituted biphenyl group, a substituted or unsubstituted p-terphenyl group, a substituted or unsubstituted m-terphenyl group, a substituted or unsubstituted o-terphenyl group, a substituted or unsubstituted chrysenyl group, a substituted or unsubstituted triphenylene group, a substituted or unsubstituted perylenyl group, a substituted or unsubstituted fluorenyl group, or a combination thereof, but is not limited thereto.

A rechargeable lithium battery may be classified into a lithium ion battery, a lithium ion polymer battery, and a lithium polymer battery depending on kinds of a separator and an electrolyte. It also may be classified to be cylindrical, prismatic, coin-type, pouch-type, and the like depending on shape. **In** addition, it may be bulk type and thin film type depending on sizes. Structures and manufacturing methods for lithium ion batteries pertaining to this disclosure are well known in the art.

Herein, a cylindrical rechargeable lithium battery will be exemplarily described as an example of the rechargeable lithium battery. FIG. 1 schematically shows the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte (not shown) impregnating the positive electrode 114, the negative electrode 112, and the separator 113, a battery case 120 housing the battery cell, and a sealing member 140 sealing the battery case 120.

Hereinafter, a more detailed configuration of the rechargeable lithium battery 100 according to an embodiment of the present invention will be described.

A rechargeable lithium battery according to an embodiment of the present invention includes an electrolyte, a positive electrode, and a negative electrode.

The electrolyte includes a non-aqueous organic solvent, a lithium salt, and an additive.

Hereinafter, an additive according to an embodiment will be described.

An additive according to an embodiment of the present invention is represented by Chemical Formula 1.

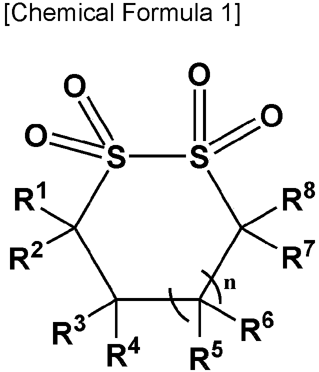

In Chemical Formula 1,
R¹ to R⁸ are each independently hydrogen, a halogen, a substituted or unsubstituted C1 to C10 alkyl group, a substituted or unsubstituted C2 to C10 alkenyl group, a substituted or unsubstituted C2 to C10 alkynyl group, a substituted or unsubstituted C1 to C10 alkoxy group, a substituted or unsubstituted C6 to C12 aryl group, or a combination thereof, and
n is an integer from 0 to 2.

The additive represented by Chemical Formula 1 is reduced and decomposed before the carbonate-based solvent included in the non-aqueous organic solvent and thus may form an SEI (Solid Electrolyte Interface) film on the negative electrode to prevent decomposition of the electrolyte and decomposition of the electrode due to the electrolyte decomposition and thus to suppress an increase in internal resistance due to gas generation.

**In** addition, a film is also formed on the surface of the positive electrode to prevent decomposition of the positive electrode surface and oxidation of the electrolyte and thus contribute to improving high-temperature cycle-life characteristics.

That is, cycle-life characteristics and high-temperature characteristics of the battery may be improved by including the additive.

Chemical Formula 1 may be represented by any one of Chemical Formula 1-1 to Chemical Formula 1-3.

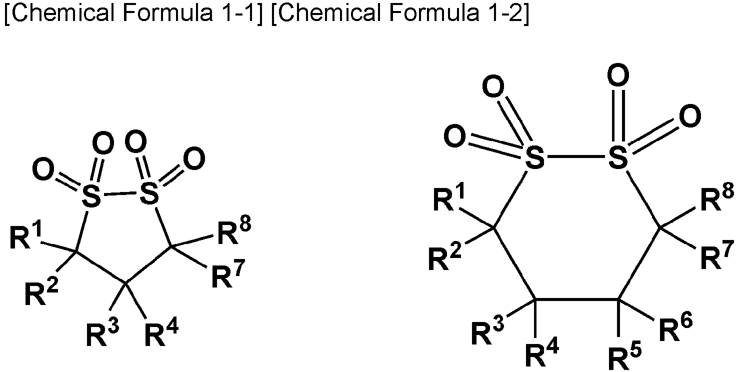

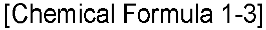

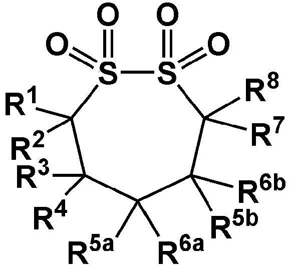

In Chemical Formula 1-1 to Chemical Formula 1-3,
R¹ to R⁸ are as described above,
R^{5a}, R^{6a}, R^{5b}, and R^{6b} are each independently hydrogen, a halogen, a substituted or unsubstituted C1 to C10 alkyl group, a substituted or unsubstituted C2 to C10 alkenyl group, a substituted or unsubstituted C2 to C10 alkynyl group, a substituted or unsubstituted C1 to C10 alkoxy group, a substituted or unsubstituted C6 to C12 aryl group, or a combination thereof.
R¹ to R⁸ may each independently be hydrogen, a halogen, or a substituted or unsubstituted C1 to C5 alkyl group.

The additive represented by Chemical Formula 1 may be selected from compounds of Group 1.

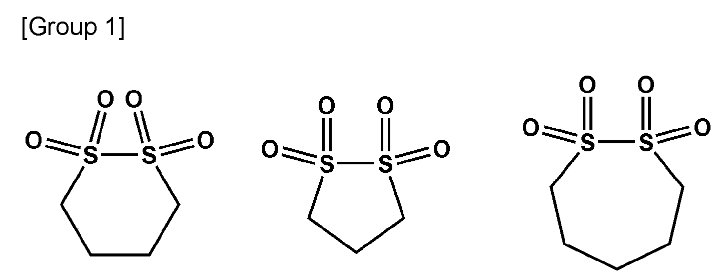

For example, the additive may be included in an amount of 0.05 to 5.0 parts by weight, for example, 0.05 to 4.0 parts by weight, or 0.05 to 3.0 parts by weight, based on 100 parts by weight of the total amount of the electrolyte.

When the amount of the additive is within the above range, a rechargeable lithium battery having further improved resistance characteristics and gas generation during high-temperature storage may be implemented.

Meanwhile, the additive may further include other additives in addition to the aforementioned compounds.

The other additives may include least one selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexanetricyanide (HTCN), propene sultone (PST), propane sultone (PS), lithium tetrafluoroborate (LiBF₄), lithium difluorophosphate (LiPO₂F₂), and 2-fluoro biphenyl (2-FBP).

By further including the aforementioned other additives, cycle-life may be further improved or gas generated from the positive electrode and negative electrode during high-temperature storage may be effectively controlled.

The other additives may be included in an amount of 0.2 to 20 parts by weight, specifically 0.2 to 15 parts by weight, for example, 0.2 to 10 parts by weight, based on 100 parts by weight of the electrolyte for a rechargeable lithium battery.

When the content of other additives is as described above, battery performance may be improved by minimizing an increase in film resistance.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methylpropionate, ethyl propionate, propylpropionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. In addition, the ketone-based solvent may be cyclohexanone and the like. The alcohol-based solvent may include ethanol, isopropyl alcohol, and the like and the aprotic solvent may include nitriles such as R-CN (wherein R is a hydrocarbon group having a C2 to C20 linear, branched, or cyclic structure and may include a double bond, an aromatic ring, or an ether bond), and the like, dioxolanes such as 1,3-dioxolane, and the like, sulfolanes, and the like.

The non-aqueous organic solvent may be used alone or in a mixture of one or more, and when one or more are mixed and used, the mixing ratio may be appropriately adjusted according to the desired battery performance, which is widely understood by those in the art.

In addition, in the case of the carbonate-based solvent, it is desirable to use a mixture of a cyclic carbonate and a chain carbonate. In this case, when the cyclic carbonate and the chain carbonate are mixed in a volume ratio of 5:5 to 1:9, the electrolyte may exhibit excellent performance.

In particular, in an embodiment of the present invention, the non-aqueous organic solvent may include the cyclic carbonate and the chain carbonate in a volume ratio of 5:5 to 2:8, and as a specific example, the cyclic carbonate and the chain carbonate may be included in a volume ratio of 4:6 to 2:8.

As a more specific example, the cyclic carbonate and the chain carbonate may be included in a volume ratio of 3:7 to 2:8.

The non-aqueous organic solvent may further include an aromatic hydrocarbon-based organic solvent in addition to the carbonate-based solvent. In this case, the carbonate-based solvent and the aromatic hydrocarbon-based solvent may be mixed in a volume ratio of 1:1 to 30:1.

The aromatic hydrocarbon-based solvent may be an aromatic hydrocarbon-based compound represented by Chemical Formula 3.

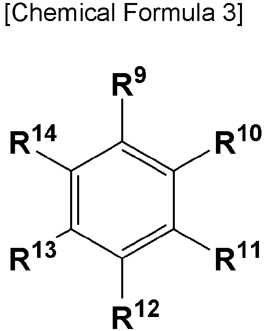

In Chemical Formula 3, R⁹ to R¹⁴ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The lithium salt dissolved in the non-organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, lithium difluoro(oxalate)borate (LiDFOB), LiPO₂F₂, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide): LiFSI), LiC₄F₉SO₃, LiClO₄, LiAlO₂, LiAlCl₄, LiN(CₓF₂ₓ₊₁SO₂)(C_{y}F_{2y+1}SO₂), (wherein x and y are natural numbers, for example, an integer ranging from 1 to 20), LiCl, Lil, and LiB(C₂O₄)₂ (lithium bis(oxalato) borate: LiBOB). The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

The positive electrode includes a positive electrode current collector and a positive electrode active material layer on the positive electrode current collector, and the positive electrode active material layer includes a positive electrode active material.

The positive electrode active material may include a cobalt-free lithium nickel manganese-based oxide.

The cobalt-free lithium nickel manganese-based oxide may include at least one of lithium composite oxides represented by Chemical Formula 2.

[Chemical Formula 2] LiₐNiₓMn_{y}M1_{z}M2_{w}O_{2-b}X_{b}

In Chemical Formula 2,
0.9 ≤ a < 1.2, 0 ≤ b < 0.1, 0 ≤ w < 0.1, 0.6 ≤ x < 1.0, 0 < y < 0.4, 0 < z < 0.1, w + x + y + z = 1,
M1 is at least one element selected from Al, Mg, Ti, Zr, Cr, Sr, V, B, W, Mo, Ce, Cr, and Nb, and
M2 is at least one element selected from Al, B, Ba, Ca, Ce, Cr, Fe, Mg, Mn, Mo, Nb, Si, Sr, Ti, V, W, and Zr, and X is at least one element selected from S, F, and P.

Of course, one having a coating layer on the surface of the lithium composite oxide may be used, or a mixture of the lithium composite oxide and the lithium composite oxide having a coating layer may be used. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, K, Na, Ca, Si, Ti, V, Sn, Ge, Ga, B, As, Zr, or a mixture thereof. The coating layer may be disposed in a method having no adverse influence on properties of a positive electrode active material by using these elements in the compound. For example, the method may include any coating method (e.g., spray coating, dipping, etc.), but is not illustrated in more detail since it is well-known to those skilled in the related field.

For example, Chemical Formula 2 may be represented by Chemical Formula 2-1.

[Chemical Formula 2-1] LiₐNiₓ₁Mn_{y1}Al_{z1}M2_{w1}O_{2-b}X_{b}

In Chemical Formula 2-1,
0.9 ≤ a < 1.2, 0 ≤ b < 0.1, 0 ≤ w1 < 0.1, 0.6 ≤ x1 < 1.0, 0 < y1 < 0.4, 0 < z1 < 0.1, w1 + x1 + y1 + z1 = 1, M2 is at least one element selected from Al, B, Ba, Ca, Ce, Cr, Fe, Mg, Mn, Mo, Nb, Si, Sr, Ti, V, W, and Zr, and X is at least one element selected from S, F, and P.

In an embodiment, in Chemical Formula 1-1, 0.6≤x1≤0.9, 0.1≤y1≤0.4, and 0≤z1≤0.1, or 0.6≤x1≤0.8, 0.2≤y1≤0.4, and 0≤z1≤0.1.

For example, in Chemical Formula 2-1, x1 may be 0.6 ≤ x1 ≤0.79, y1 may be 0.2 ≤ y1 ≤0.39, and z1 may be 0.01 ≤ z1 < 0.1.

A content of the positive electrode active material may be 90 wt% to 98 wt% based on the total weight of the positive electrode active material layer.

In an embodiment of the present invention, the positive electrode active material layer may include a binder. In this case, a content of the binder may be 1 wt% to 5 wt% based on the total weight of the positive electrode active material layer.

The binder improves binding properties of positive electrode active material particles with one another and with a current collector and examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The positive electrode current collector may include Al, but is not limited thereto.

The negative electrode includes a negative electrode current collector and a negative electrode active material layer including a negative electrode active material formed on the negative electrode current collector.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon material, the carbon material may be any generally-used carbon-based negative electrode active material in a rechargeable lithium ion battery, and examples thereof may be crystalline carbon, amorphous carbon, or a mixture thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, Si-C composite, SiOₓ (0 < x < 2), a Si-Q alloy wherein Q is an element selected from an alkali metal, an alkaline-earth metal, a Group 13 element, a Group 14 element, a Group 15 element, a Group 16 element, a transition metal, a rare earth element, and a combination thereof, and not Si), Sn, SnO₂, Sn-R (wherein R is an element selected from an alkali metal, an alkaline-earth metal, a Group 13 element, a Group 14 element, a Group 15 element, a Group 16 element, a transition metal, a rare earth element, and a combination thereof, and not Sn), and the like and at least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be vanadium oxide, lithium vanadium oxide, or lithium titanium oxide.

In an example embodiment the negative electrode active material may include at least one of graphite and a Si composite.

The Si composite includes a core including Si-based particles and amorphous carbon coating layer, and for example the Si-based particles may include at least one of Si particles, a Si-C composite, SiOₓ (0 < x ≤ 2), and a Si alloy.

For example, the Si-C composite may include a Si particles and crystalline carbon.

A void may be included in the central portion of the core, and a radius of the central portion may correspond to 30% to 50% of the radius of the Si-C composite.

An average particle diameter of the Si particle may be 10 nm to 200 nm.

In the present specification, the average particle diameter may be a particle size (D50) at 50% by volume in a cumulative size-distribution curve.

When the average particle diameter of the Si particle is within the above range, volume expansion occurring during charging and discharging may be suppressed, and a break in a conductive path due to particle crushing during charging and discharging may be prevented.

The Si particle may be included in an amount of 1 wt% to 60 wt%, for example, 3 wt% to 60 wt% based on the total weight of the Si-C composite.

The central portion does not include amorphous carbon, and the amorphous carbon may be present only on the surface portion of the negative electrode active material.

Herein, the surface portion indicates a region from the central portion of the negative electrode active material to the outermost surface of the negative electrode active material.

In addition, the Si particles are substantially uniformly included over the negative electrode active material, that is, present at a substantially uniform concentration in the central portion and the surface portion thereof.

The amorphous carbon may be soft carbon, hard carbon, mesophase pitch carbonized product, calcined coke, or a combination thereof.

The negative electrode active material may further include crystalline carbon.

When the negative electrode active material includes a Si-C composite and crystalline carbon together, the Si-C composite and crystalline carbon may be included in the form of a mixture, and in this case, the Si-C composite and crystalline carbon may be included in a weight ratio of 1:99 to 50:50. More specifically, the Si-C composite and crystalline carbon may be included in a weight ratio of 3 : 97 to 20 : 80 or 5 : 95 to 20 : 80.

The crystalline carbon may be, for example, graphite, and more specifically natural graphite, artificial graphite, or a mixture thereof.

An average particle diameter of the crystalline carbon may be 5 µm to 30 µm.

The amorphous carbon precursor may include a coal-based pitch, mesophase pitch, petroleum-based pitch, coal-based oil, petroleum-based heavy oil, or a polymer resin such as a phenol resin, a furan resin, or a polyimide resin.

The amorphous carbon precursor may include a coal-based pitch, mesophase pitch, petroleum-based pitch, coal-based oil, petroleum-based heavy oil, or a polymer resin such as a phenol resin, a furan resin, or a polyimide resin.

In the negative electrode active material layer, the negative electrode active material may be included in an amount of 95 wt% to 99 wt% based on the total weight of the negative electrode active material layer.

In an embodiment of the present invention, the negative electrode active material layer includes a binder, and optionally a conductive material. In the negative electrode active material layer, a content of the binder may be 1 wt% to 5 wt% based on the total weight of the negative electrode active material layer. When the negative electrode active material layer includes a conductive material, the negative electrode active material layer includes 90 wt% to 98 wt% of the negative electrode active material, 1 wt% to 5 wt% of the binder, and 1 wt% to 5 wt% of the conductive material.

The binder improves binding properties of negative electrode active material particles with one another and with a current collector. The binder includes a non-water-soluble binder, a water-soluble binder, or a combination thereof.

The non-water-soluble binder may be selected from polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropylenecopolymer, polyethyleneoxide, polyvinylpyrrolidone, polyepichlorohydrine, polyphosphazene, polyacrylonitrile, polystyrene, an ethylenepropylenediene copolymer, polyvinylpyridine, chlorosulfonated polyethylene, latex, a polyester resin, an acrylic resin, a phenolic resin, an epoxy resin, polyvinyl alcohol, and a combination thereof.

When the water-soluble binder is used as a negative electrode binder, a cellulose-based compound may be further used to provide viscosity. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of 0.1 to 3 parts by weight based on 100 parts by weight of the negative electrode active material.

The conductive material is included to provide electrode conductivity and any electrically conductive material may be used as a conductive material unless it causes a chemical change and examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum silver, and the like; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

A separator may exist between the positive electrode and the negative electrode depending on the type of the rechargeable lithium battery. Such a separator may for example include polyethylene, polypropylene, polyvinylidene fluoride or and multi-layers thereof such as a polyethylene/polypropylene double-layered separator, a polyethylene/polypropylene/polyethylene triple-layered separator, a polypropylene/polyethylene/polypropylene triple-layered separator, and the like.

The rechargeable lithium battery may be operated at a high voltage of 4.4 V or higher, for example, 4.4 V to 4.45 V.

### [Best Mode for Invention]

Hereinafter, examples of the present invention and comparative examples are described. These examples, however, are not in any sense to be interpreted as limiting the scope of the invention.

### Manufacture of Rechargeable Lithium Battery Cells

### Example 1

Positive electrode active material slurry was prepared by using LiNi_{0.75}Mno_{0.23}Al_{0.02}O₂ as a positive electrode active material, polyvinylidene fluoride as a binder, and ketjen black as a conductive material in a weight ratio of 96:3:1 and dispersing the mixture in N-methyl pyrrolidone.

The positive electrode active material slurry was coated on a 15 µm-thick Al foil, dried at 100 °C, and pressed to manufacture a positive electrode.

A negative electrode active material was prepared by mixing artificial graphite and an Si-C composite in a weight ratio of 93:7, and then the negative electrode active material, a styrene-butadiene rubber binder, and carboxylmethyl cellulose were mixed in a weight ratio of 98:1:1 and then, dispersed in distilled water to prepare negative electrode active material slurry.

The Si-C composite included a core including artificial graphite and silicon particles, and a coal-based pitch coated on the surface of the core.

The negative electrode active material slurry was coated on a 10 µm-thick Cu foil, dried at 100° C, and pressed to manufacture a negative electrode.

An electrode assembly was manufactured by assembling the manufactured positive and negative electrodes, and a separator made of polyethylene having a thickness of 10 µm, and an electrolyte was injected to manufacture a rechargeable lithium battery cell.

The electrolyte has a following composition.

### (Composition of Electrolyte)

Salt: LiPF₆ 1.15 M
Solvent: ethylene carbonate: ethylmethyl carbonate: dimethyl carbonate (EC:EMC:DMC= volume ratio of 20:10:70)

Additive represented by Chemical Formula 1a: 0.5 parts by weight

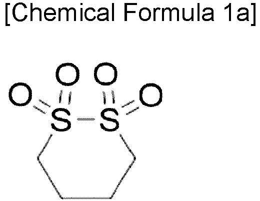

Other additive: 3 parts by weight of fluoroethylene carbonate (FEC)
(In the composition of the electrolyte, "parts by weight" means the relative weight of the additive based on 100 weight of the total electrolyte (lithium salt+non-aqueous organic solvent).

### Examples 2 to 4 and Comparative Example 1

As described in Table 1, each rechargeable lithium battery cell was manufactured in the same manner as in Example 1 except that the electrolyte was prepared by changing the content of the additive represented by Chemical Formula 1a.

### Example 5

A rechargeable lithium battery cell was manufactured in the same manner as in Example 1 except that the electrolyte was prepared by using the additive represented by Chemical Formula 1b instead of the additive represented by Chemical Formula 1a.

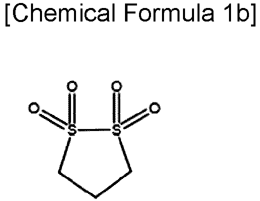

### Examples 6 to 8

Each rechargeable lithium battery cell was manufactured in the same manner as in Example 5 except that the electrolyte was prepared by changing the content of the additive represented by Chemical Formula 1b as shown in Table 1.

### Example 9

A rechargeable lithium battery cell was manufactured in the same manner as in Example 1 except that the electrolyte was prepared by using the additive represented by Chemical Formula 1b instead of the additive represented by Chemical Formula 1a.

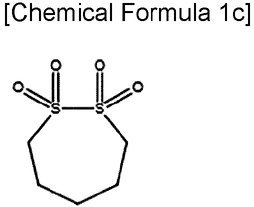

### Examples 10 to 12

A rechargeable lithium battery cell was manufactured in the same manner as in Example 9 except that the electrolyte was prepared by changing the content of the additive represented by Chemical Formula 1c as shown in Table 1.

### Comparative Example 2

A rechargeable lithium battery cell was manufactured in the same manner as in Example 1 except that the electrolyte was prepared by using tetramethyl sulfone represented by Chemical Formula d instead of the additive represented by Chemical Formula 1a.

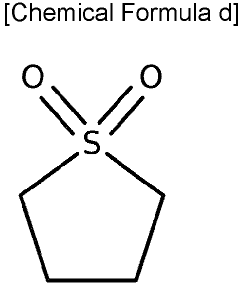

### Comparative Example 3

A rechargeable lithium battery cell was manufactured in the same manner as in Example 1 except that the electrolyte was prepared by using methylene methane disulfonate represented by Chemical Formula e instead of the additive represented by Chemical Formula 1a.

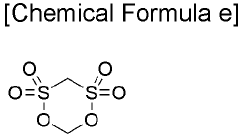

**(Table 1)**

| | Additive (parts by weight) | | | | |
|---|---|---|---|---|---|
| | Chemical Formula 1a | Chemical Formula 1b | Chemical Formula 1c | Chemical Formula d | Chemical Formula e |
| Comp. Ex. 1 | - | - | - | - | - |
| Ex. 1 | 0.5 | - | - | - | - |
| Ex. 2 | 1.0 | - | - | - | - |
| Ex. 3 | 3.0 | - | - | - | - |
| Ex. 4 | 5.0 | - | - | - | - |
| Ex. 5 | - | 0.5 | - | - | - |
| Ex. 6 | - | 1.0 | - | - | - |
| Ex. 7 | - | 3.0 | - | - | - |
| Ex. 8 | - | 5.0 | - | - | - |
| Ex. 9 | - | - | 0.5 | - | - |
| Ex. 10 | - | - | 1.0 | - | - |
| Ex. 11 | - | - | 3.0 | - | - |
| Ex. 12 | - | - | 5.0 | - | - |
| Comp. Ex. 2 | - | - | - | 1.0 | - |
| Comp. Ex. 3 | - | - | - | - | 1.0 |

### Reference Example 1 and Comparative Example 4

Each rechargeable lithium battery cell according to Comparative Example 4 and Reference Example 1 was manufactured in the same manner as in Comparative Example 1 and Example 2 except that the positive electrode active material was changed into LiCoO₂. Specific compositions thereof are shown in Table 2.

**(Table 2)**

| | Composition of electrolyte | Positive electrode active material |
|---|---|---|
| Comp. Ex. 4 | 1.15M LiPF₆, EC/EMC/DMC = 2/1/7 (v/v/v), 3 parts by weight of FEC | LiCoO₂ |
| Ref. Ex. 1 | 1.15 M LiPF₆, EC/EMC/DMC = 2/1/7 (v/v/v), 3 parts by weight of FEC, 1.0 parts by weight of Chemical Formula 1a | |

### Evaluation 1: Measurement of Generated Gas Amount after High-temperature Storage

The rechargeable lithium battery cells according to Examples 1 to 12, Comparative Examples 1 to 4, and Reference Example 1 were manufactured as a 4.4 V level 30 mAh cell, allowed to stand at 60 °C for 7 days, and then, measured with respect to each amount (ml) of gas generated at the 1^{st} day and the 7^{th} through refinery gas analysis (RGA), and the results are shown in Table 3.

### Evaluation 2: Evaluation of DC Resistance Increase Rate after High-temperature Storage

The rechargeable lithium battery cells according to Examples 1 to 12, Comparative Examples 1 to 4, and Reference Example 1 were measured with respect to ΔV/ΔI (voltage change/current change) to obtain DC initial resistance (DCIR) and then, fully charged, until an internal maximum energy state reached a full-charge state (SOC 100%), stored at 60 °C for 30 days, and measured with respect to DC resistance, which was used to calculate a DC-IR increase rate (%) [{(DC-IR after 30 days)/(initial DC-IR)}*100], and the results are shown in Table 3.

**(Table 3)**

| | Gas amount (mL) | | Initial DC-IR (mΩ) | 60 °C @ 30D (mΩ) | DC-IR Increase rate (%) |
|---|---|---|---|---|---|
| | 1 day | 7 days | | | |
| Comp. Ex. 1 | 0.033 | 0.080 | 42.28 | 52.00 | 123 |
| Ex. 1 | 0.029 | 0.064 | 42.31 | 48.66 | 115 |
| Ex. 2 | 0.031 | 0.059 | 42.36 | 46.17 | 109 |
| Ex. 3 | 0.032 | 0.057 | 42.41 | 45.38 | 107 |
| Ex. 4 | 0.033 | 0.054 | 43.07 | 44.79 | 104 |
| Ex. 5 | 0.031 | 0.069 | 42.33 | 49.10 | 116 |
| Ex. 6 | 0.032 | 0.062 | 42.37 | 47.03 | 111 |
| Ex. 7 | 0.033 | 0.061 | 42.43 | 46.25 | 109 |
| Ex. 8 | 0.035 | 0.058 | 43.10 | 45.26 | 105 |
| Ex. 9 | 0.032 | 0.072 | 42.34 | 49.11 | 116 |
| Ex. 10 | 0.033 | 0.063 | 42.36 | 47.44 | 112 |
| Ex. 11 | 0.035 | 0.065 | 42.44 | 46.26 | 109 |
| Ex. 12 | 0.036 | 0.059 | 43.11 | 45.70 | 106 |
| Comp. Ex. 2 | 0.035 | 0.081 | 42.42 | 49.63 | 117 |
| Comp. Ex. 3 | 0.036 | 0.084 | 42.44 | 50.08 | 118 |
| Comp. Ex. 4 | 0.029 | 0.071 | 41.79 | 50.57 | 121 |
| Ref. Ex. 1 | 0.031 | 0.072 | 42.18 | 49.77 | 118 |

Referring to Table 3, when the additive and the positive electrode composition according the present invention were included, the generated gas amount was significantly reduced, resulting in improving storage characteristics at a high temperature.

On the other hand, when the additive according to the present invention was not included (Comparative Examples 1 to 4), or the positive electrode composition according to the present invention was not included (Reference Example 1), the generated gas amount was relatively high.

In addition, when the additive and the positive electrode composition according to the present invention were included, an increase of DC resistance after stored at a high temperature to the initial DC resistance was relatively alleviated, resulting in improving storage characteristics at a high temperature.

Similarly, when the additive according to the present invention was not included (Comparative Examples 1 to 4), or the positive electrode composition according to the present invention (Reference Example 1) was not included, the DC resistance increase rate after stored at a high temperature was relatively high.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

### <Description of Symbols>

100: rechargeable lithium battery
112: negative electrode
113: separator
114: positive electrode
120: battery case
140: sealing member

## Claims

1. An additive represented by Chemical Formula 1: 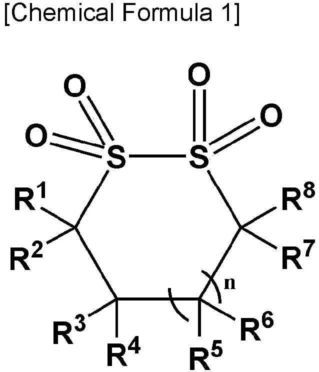 wherein, in Chemical Formula 1,
R¹ to R⁸ are each independently hydrogen, a halogen, a substituted or unsubstituted C1 to C10 alkyl group, a substituted or unsubstituted C2 to C10 alkenyl group, a substituted or unsubstituted C2 to C10 alkynyl group, a substituted or unsubstituted C1 to C10 alkoxy group, a substituted or unsubstituted C6 to C12 aryl group, or a combination thereof, and
n is an integer from 0 to 2.

2. The additive of claim 1, wherein
Chemical Formula 1 is represented by any one of Chemical Formula 1-1 to Chemical Formula 1-3: 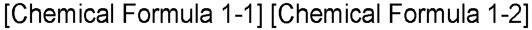 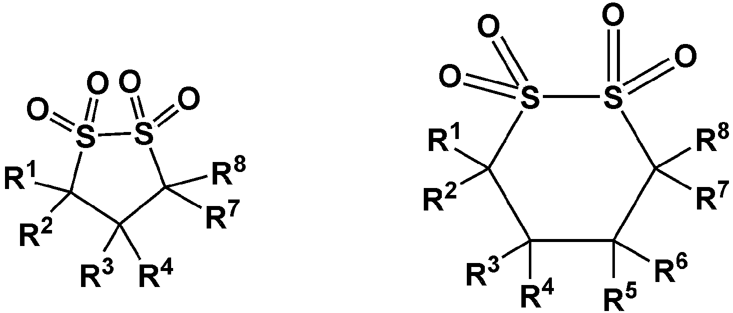 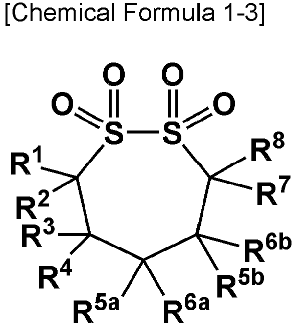 wherein, in Chemical Formula 1-1 to Chemical Formula 1-3,
R¹ to R⁸ are as defined in claim 1, and
R^{5a}, R^{6a}, R^{5b}, and R^{6b} are each independently hydrogen, a halogen, a substituted or unsubstituted C1 to C10 alkyl group, a substituted or unsubstituted C2 to C10 alkenyl group, a substituted or unsubstituted C2 to C10 alkynyl group, a substituted or unsubstituted C1 to C10 alkoxy group, a substituted or unsubstituted C6 to C12 aryl group, or a combination thereof.

3. The additive of claim 1, wherein
R¹ to R⁸ are each independently hydrogen, a halogen, or a substituted or unsubstituted C1 to C5 alkyl group.

4. The additive of claim 1, wherein
the additive represented by Chemical Formula 1 is selected from compounds of Group 1:

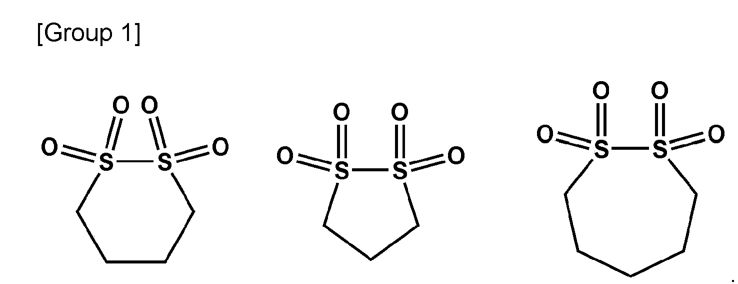

5. A rechargeable lithium battery, comprising
an electrolyte including a non-aqueous organic solvent, a lithium salt, and the additive of any one of claim 1 to claim 4;
a positive electrode including a positive electrode active material; and
a negative electrode including a negative electrode active material,
wherein the positive electrode active material includes a cobalt-free lithium nickel manganese-based oxide.

6. The rechargeable lithium battery of claim 5, wherein
the cobalt-free lithium nickel manganese-based oxide includes a lithium composite oxide represented by Chemical Formula 2:
[Chemical Formula 2] LiₐNiₓMn_{y}M1_{z}M2_{w}O_{2-b}X_{b}
wherein, in Chemical Formula 2,
0.9 ≤ a < 1.2, 0 ≤ b < 0.1, 0 ≤ w < 0.1, 0.6 ≤ x < 1.0, 0 < y < 0.4, 0 < z < 0.1, w + x + y + z = 1,
M1 is at least one element selected from Al, Mg, Ti, Zr, Cr, Sr, V, B, W, Mo, Ce, Cr, and Nb, and
M2 is at least one element selected from Al, B, Ba, Ca, Ce, Cr, Fe, Mg, Mn, Mo, Nb, Si, Sr, Ti, V, W, and Zr, and X is at least one element selected from S, F, and P.

7. The rechargeable lithium battery of claim 6, wherein
Chemical Formula 2 is represented by Chemical Formula 2-1:
[Chemical Formula 2-1] LiₐNiₓ₁Mn_{y1}Al_{z1}M2_{w1}O_{2-b}X_{b}
wherein, in Chemical Formula 2-1,
0.9 ≤ a < 1.2, 0 ≤ b < 0.1, 0 ≤ w1 < 0.1, 0.6 ≤ x1 < 1.0, 0 < y1 < 0.4, 0 < z1 < 0.1, w1 + x1 + y1 + z1 = 1, M2 is at least one element selected from Al, B, Ba, Ca, Ce, Cr, Fe, Mg, Mn, Mo, Nb, Si, Sr, Ti, V, W, and Zr, and X is at least one element selected from S, F, and P.

8. The rechargeable lithium battery of claim 7, wherein
in Chemical Formula 2-1, x1 is 0.6 ≤ x1 ≤0.79, y1 is 0.2 ≤ y1 ≤0.39, and z1 is 0.01 ≤ z1 < 0.1.

9. The rechargeable lithium battery of claim 5, wherein
the negative electrode active material includes at least one of graphite and a Si composite.

10. The rechargeable lithium battery of claim 9, wherein
the Si composite includes a core including Si-based particles and an amorphous carbon coating layer.

11. The rechargeable lithium battery of claim 10, wherein
the core including the Si-based particles includes at least one of Si particles, a Si-C composite, SiOₓ (0 < x ≤ 2), and a Si alloy.

12. The rechargeable lithium battery of claim 11, wherein
the central portion of the core includes voids.

13. The rechargeable lithium battery of claim 12, wherein
a radius of the central portion corresponds to about 30% to about 50% of the radius of the Si-C composite, and
an average particle diameter of the Si particle is about 10 nm to about 200 nm.

14. The rechargeable lithium battery of claim 12, wherein
the central portion does not include amorphous carbon, and the amorphous carbon is present only on the surface portion of the negative electrode active material.

15. The rechargeable lithium battery of claim 11, wherein
the negative electrode active material further includes crystalline carbon.

16. The rechargeable lithium battery of claim 5, wherein
the additive is included in an amount of 0.05 to 5.0 parts by weight based on 100 parts by weight of the electrolyte.

17. The rechargeable lithium battery of claim 5, wherein
the additive is included in an amount of 0.05 to 3.0 parts by weight based on 100 parts by weight of the electrolyte.

18. The rechargeable lithium battery of claim 5, wherein
the additive further includes least one other additive selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexanetricyanide (HTCN), propene sultone (PST), propane sultone (PS), lithium tetrafluoroborate (LiBF₄), lithium difluorophosphate (LiPO₂F₂), and 2-fluoro biphenyl (2-FBP).

19. The rechargeable lithium battery of claim 5, wherein
the rechargeable lithium battery is operated at a high voltage of 4.4 V or higher.
